# EUROPEAN PATENT APPLICATION

(11) **EP 2 725 392 A1**
(43) Date of publication of application: **30.04.2014**
(21) Application number: 12190394.2
(22) Date of filing: 29.10.2012
(51) Int. Cl.: G02B 1/10, G02B 5/08, C03C 17/36

(54) **Weatherproof high-reflection plate and manufacturing method thereof**

(71) Applicant: Xxentria Technology Materials Co., Ltd., Tainan City 71752 (TW)
(72) Inventor: Tsai, Hung Ling, Tainan City 71752 (TW)
(74) Representative: Chaillot, Geneviève

(57) **Abstract**

The present invention relates to a weatherproof high-reflection plate and a manufacturing method thereof and comprises a main reflection layer, a preconditioning layer, a reflecting enhancement layer and a transparent protective layer: the main reflection layer consists of aluminum, aluminum alloy or a combination thereof; the preconditioning layer is an oxide layer formed on the main reflection layer; the reflecting enhancement layer covers the preconditioning layer; the transparent protective layer is fluorocarbon paint coated on the reflecting enhancement layer. As such, the weatherproof high-reflection plate features waterproof and anti-corrosion surface and superior reflectivity in wavelength coverage of visible light.

## Description

### BACKGROUND OF THE INVENTION

### 1. FIELD OF THE INVENTION

The present invention is a weatherproof high-reflection plate and a manufacturing method thereof, particularly a weatherproof high-reflection plate comprising a main reflection layer, a preconditioning layer, a reflecting enhancement layer and a transparent protective layer and a manufacturing method thereof.

### 2. DESCRIPTION OF THE PRIOR ART

In general, a reflection plate relies on aluminum or silver as a main reflection body and glass as one protection layer on surface. This end product, however, has some drawbacks such as high manufacture cost, high weight, vulnerability, and high-bending sensitivity.

Accordingly, there have been alternative products available in the market such as water-repellent, anti-corrosion, wear-resistant and weatherproof reflection plate with one transparent protective layer on which sol-gel paint is coated, heated and cured in order to avoid high manufacture cost, high weight, vulnerability, and high-bending sensitivity.

Based on the prior art, the above reflection plate features reflectivity in wavelength coverage of visible light upgraded to over 90% from the range of 75%∼83% when an extra reflecting enhancement layer is added between a main reflection layer and a protective layer. On the other hand, this reflection plate has other properties such as total reflectivity loss and gloss loss which are less than 5% according to test results by ASTM G53-96 and QUV-2000H.

It can be seen from the prior art that some problems including reflectivity and resistance to degeneration under long-term natural sunlight still need to be corrected despite improvement of other issues such as manufacture cost, weight and flexibility.

### SUMMARY OF THE INVENTION

The present invention is intended for providing a weatherproof high-reflection plate which comprises a main reflection layer, a preconditioning layer, a reflecting enhancement layer and a transparent protective layer wherein the preconditioning layer, the reflecting enhancement layer, and the transparent protective layer are sequentially stacked on a substrate, that is, the main reflection layer.

As one substrate, the main reflection layer providing a reflective action is manufactured with either one material among aluminum, aluminum alloy, aluminum-bearing material, and aluminum-bearing composite material or a combination of two materials thereof. Moreover, the main reflection layer has thicknesses between 0.1 and 1.2 mm and purity of aluminum is greater than 99.85%.

The preconditioning layer formed on the main reflection layer is an anodized oxide layer in which there is chromic acid, phosphoric acid, aluminum metal oxide, transition metal oxide or transition metal salt and has thicknesses between 800 and 2000 nm.

The reflecting enhancement layer which covers the preconditioning layer and is developed with an aluminum metal layer or aluminum alloy deposited has thicknesses between 10 and 300 nm, roughness less than 0.1µm, and total reflectivity in wavelength coverage of visible light greater than 94%. The reflecting enhancement layer is able to enhance reflectivity of the weatherproof high-reflection plate in wavelength coverage of infrared light, visible light and ultraviolet light.

The reflecting enhancement layer is further laid over with an optical coating layer which consists of silicon dioxide (Si02), titanium dioxide (Ti02), or a combination thereof and has thicknesses between 40 and 120nm.

The transparent protective layer deposited on the reflecting enhancement layer features high transmittance, achromatic color, and thicknesses between 6 and 13µm. Furthermore, the transparent protective layer has total reflectivity greater than 92% as well as gloss loss less than 5% in wavelength coverage of visible light according to test results by ASTM G154-06 and QUV-A 4000H. It can be seen from above descriptions that the present invention is significantly advanced in reflectivity greater than 90% within wavelength coverage of visible light compared with QUV-2000H based on prior arts.

The present invention is intended for providing a method to manufacture a weatherproof high-reflection plate and comprise steps as follows: (a) Machine aluminum, aluminum alloy or a combination thereof for development of a laminar/banded main reflection layer which continuously experiences steps like casting, forging, cold molding, hot pressing, grinding and polishing; (b) Grind and clean any contaminant or native oxide on the main reflection layer with strong acid chemicals or alkali chemicals before anodizing; (c) Anodize the main reflection layer with chromate treatment, phosphide treatment or anodic oxidation for development of a preconditioning layer; (d) Deposit aluminum, aluminum alloy or a combination thereof on the preconditioning layer for development of a reflecting enhancement layer by means of physical vapor deposition (PVD), evaporation or sputtering; (e) Develop an optical coating layer on the reflecting enhancement layer; (f) Mix fluorocarbon resin (70∼80Wt.%), melamine (8∼12Wt.%), cyclohexanone (8∼10Wt.%) and additive agent (3∼8Wt.%) uniformly to create fluorocarbon paint which can be further coated on the reflecting enhancement layer at speeds of 20 to 60 m/min and heated, baked and cured in temperatures of 200 to 300 degrees Celsius for development of a transparent protective layer. In above steps, the additive agent can be leveling agent, defoamer, catalyst, dispersant, ultraviolet absorbent or a combination thereof.

These features and advantages of the present invention will be fully understood and appreciated from the following detailed description of the accompanying Drawings.

### BRIEF DESCRIPTION OF THE DRAWINGS

FIG 1 is a schematic sectional view of the present invention of a weatherproof high-reflection plate.
FIG 2 is a flowchart to manufacture the present invention of a weatherproof high-reflection plate.

### DETAILED DESCRIPTION OF THE PREFERRED EMBODIMENT

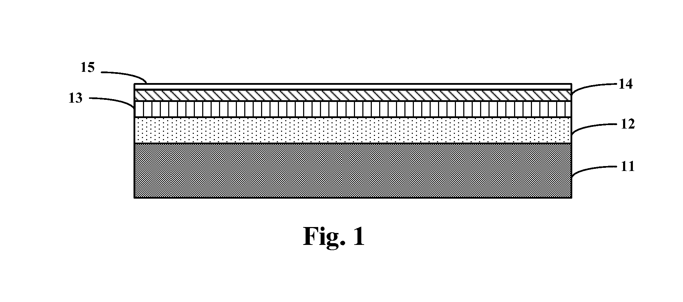

The present invention provides a weatherproof high-reflection plate as shown in FIG 1 that illustrates a schematic sectional view of the weatherproof high-reflection plate comprising a main reflection layer 11, a preconditioning layer 12, a reflecting enhancement layer 13, an optical coating layer 14 and a transparent protective layer 15, all of which are sequentially stacked on a substrate, that is, the main reflection layer.

The main reflection layer 11 providing a reflective action is manufactured with either one material among aluminum, aluminum alloy, aluminum-bearing material, and aluminum-bearing composite material or a combination of two materials thereof and has thicknesses between 0.1 and 1.2 mm and purity of aluminum greater than 99.85%; the preconditioning layer 12 formed on the main reflection layer 11 is an anodized oxide layer in which there is chromic acid, phosphoric acid, aluminum metal oxide, transition metal oxide or transition metal salt and has thicknesses between 800 and 2000 nm; the reflecting enhancement layer 13 which covers the preconditioning layer 12 and is developed with an aluminum metal layer or aluminum alloy deposited has thicknesses between 10 and 300 nm as well as roughness less than 0.1µm, and enhances reflectivity of the weatherproof high-reflection plate within wavelength coverage of infrared light, visible light (total reflectivity greater than 94%) and ultraviolet light; the optical coating layer 14 between the reflecting enhancement layer 13 and the transparent protective layer 15 consists of silicon dioxide (Si02), titanium dioxide (Ti02), or a combination thereof and has thicknesses between 40 and 120nm; the transparent protective layer 15 which is fluorocarbon paint coated on the optical coating layer 14 features high transmittance, achromatic color, thicknesses between 6 and 13µm, and total reflectivity greater than 92% as well as gloss loss less than 5% in wavelength coverage of visible light according to test results by ASTM G154-06 and QUV-A 4000H. The present invention of a weatherproof high-reflection plate is characteristic of waterproof and anti-corrosion surface and has total reflectivity greater than 92% in wavelength coverage of visible light.

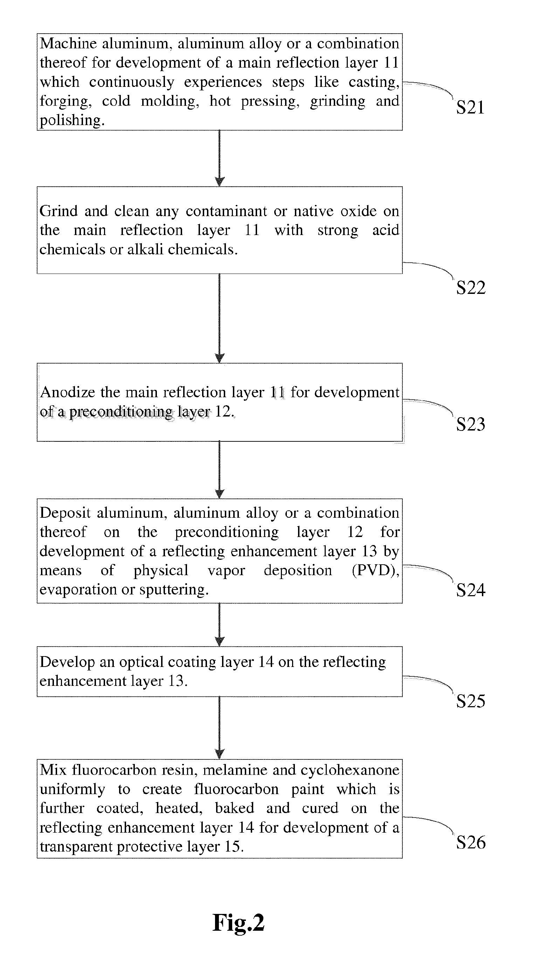

Referring to FIG. 2 which illustrates a flowchart to manufacture the weatherproof high-reflection plate and comprises steps as follows:
- Step S21:: Machine, grind and polish aluminum, aluminum alloy or a combination thereof which is laminar or banded for development of a main reflection layer 11.
- Step S22:: Grind and clean any contaminant or native oxide on the main reflection layer 11 with strong acid chemicals or alkali chemicals.
- Step S23:: Anodize the main reflection layer 11 for development of a preconditioning layer 12.
- Step S24:: Deposit aluminum, aluminum alloy or a combination thereof on the preconditioning layer 12 for development of a reflecting enhancement layer 13 by means of physical vapor deposition (PVD), evaporation or sputtering.
- Step S25:: Develop an optical coating layer 14 on the reflecting enhancement layer 13.
- Step S26:: Mix fluorocarbon resin, melamine, cyclohexanone and additive agent uniformly to create fluorocarbon paint which is coated, heated, baked and cured on the optical coating layer 14 for development of a transparent protective layer 15.

Notwithstanding above descriptions, the present invention are not limited to the embodiments.

It can be seen from above descriptions that the present invention is also available to reflective or semiconductor-based optoelectronic devices, light-source collection technologies, and reflective lighting components such as illumination at a video station or ceilings, reflection of a light deflection plate, and automobile headlight. Furthermore, the present invention is also used in sunlight reflection of different fields such as solar-thermal technology, solar power generation, solar photovoltaic starter, and solar thermal collector, solar furnace and solar oven as tools to concentrate sunlight. The present invention with superior properties in reflectivity and anti-corrosion is also available to a building's exterior embellishment.

Many changes and modifications in the above described embodiment of the invention can, of course, be carried out without departing from the scope thereof. Accordingly, to promote the progress in science and the useful arts, the invention is disclosed and is intended to be limited only by the scope of the appended claims.

## Claims

1. A weatherproof high-reflection plate, comprising:
A main reflection layer developed with aluminum, aluminum alloy or a combination thereof;
A preconditioning layer which is an oxide layer formed on said main reflection layer;
A reflecting enhancement layer deposited on said preconditioning layer; and
A transparent protective layer which is fluorocarbon paint coated on said reflecting enhancement layer.

2. The weatherproof high-reflection plate according to Claim 1 wherein said aluminum or aluminum alloy has purity greater than 99.85%; said preconditioning layer is developed with chromic acid, phosphoric acid, aluminum metal oxide, or transition metal oxide or seal; and said reflecting enhancement layer is developed with aluminum, aluminum alloy or a combination thereof.

3. The weatherproof high-reflection plate according to Claim 1 wherein said main reflection layer has thicknesses between 0.1 and 1.2 mm; said preconditioning layer has thicknesses between 800 and 2000 nm; said reflecting enhancement layer has thicknesses between 10 and 300 nm and roughness less than 0.1 µm; said transparent protective layer has thicknesses between 6 and 13 µm.

4. The weatherproof high-reflection plate according to Claim 1 further comprises an optical coating layer between said reflecting enhancement layer and said transparent protective layer.

5. The weatherproof high-reflection plate according to Claim 4 wherein said optical coating layer consists of silicon dioxide (Si02), titanium dioxide (Ti02) or a combination thereof.

6. The weatherproof high-reflection plate according to Claim 4 wherein said optical coating layer has thicknesses between 40 and 120 nm.

7. The weatherproof high-reflection plate according to Claim 1 wherein said fluorocarbon paint consists of fluorocarbon resin (70-80 Wt.%), melamine (8-12 Wt.%), cyclohexanone (8∼10 Wt.%) and additive agent (3∼8Wt.%) and said additive agent is either one agent among leveling agent, defoamer, catalyst, dispersant, and ultraviolet absorbent or a combination thereof.

8. The weatherproof high-reflection plate according to Claim 1 wherein said reflecting enhancement layer has total reflectivity in wavelength coverage of visible light greater than 94%; said transparent protective layer has total reflectivity and gloss loss in wavelength coverage of visible light greater than 92% and less than 5%, respectively.

9. A method to manufacture a weatherproof high-reflection plate by steps as follows:
Provide a main reflection layer which is developed with aluminum, aluminum alloy, or a combination thereof;
Anodize said main reflection layer for development of a preconditioning layer;
Deposit aluminum, aluminum alloy, or a combination thereof on said preconditioning layer for development of a reflecting enhancement layer; and
Spread fluorocarbon paint on said reflecting enhancement layer for development of a transparent protective layer.

10. The method to manufacture a weatherproof high-reflection plate according to Claim 9 wherein said aluminum, aluminum alloy, or a combination thereof has grinded and polished surface.

11. The method to manufacture a weatherproof high-reflection plate according to Claim 9 further comprises grinding and cleaning any contaminant or native oxide on the main reflection layer with strong acid or alkali before anodizing.

12. The method to manufacture a weatherproof high-reflection plate according to Claim 9 allows said optical coating layer to be deposited on said reflecting enhancement layer first and then said transparent protective layer to cover said optical coating layer.

13. The method to manufacture a weatherproof high-reflection plate according to Claim 9 wherein said step of spreading fluorocarbon paint for development of said transparent protective layer refers to a process of uniformly mixing fluorocarbon resin (70∼80Wt.%), melamine (8-12 Wt.%), cyclohexanone (8-10 Wt.%) and additive agent (3∼8Wt.%) for coating, heating, baking, and curing; said additive agent can be either one agent among leveling agent, defoamer, catalyst, dispersant and ultraviolet absorbent or a combination thereof.

14. The method to manufacture a weatherproof high-reflection plate according to Claim 9 wherein said aluminum or aluminum alloy has purity greater than 99.85%; said preconditioning layer is developed with chromic acid, phosphoric acid, aluminum metal oxide, or transition metal oxide or salt; said reflecting enhancement layer consists of aluminum, aluminum alloy or a combination thereof.

15. The method to manufacture a weatherproof high-reflection plate according to Claim 9 wherein said anodizing can be chromate treatment, phosphide treatment or anodic oxidation.

16. The method to manufacture a weatherproof high-reflection plate according to Claim 12 wherein said optical coating layer consists of silicon dioxide (Si02), titanium dioxide (Ti02) or a combination thereof.

17. The method to manufacture a weatherproof high-reflection plate according to Claim 13 wherein said fluorocarbon paint is heated and baked in temperatures of 200 to 300 degrees Celsius.

18. The method to manufacture a weatherproof high-reflection plate according to Claim 9 wherein said reflecting enhancement layer has total reflectivity in wavelength coverage of visible light greater than 94%; said transparent protective layer has total reflectivity and gloss loss in wavelength coverage of visible light greater than 92% and less than 5%, respectively.
